# NEUE EUROPÄISCHE PATENTSCHRIFT

(11) **EP 2 148 322 B2**
(45) Veröffentlichungstag und Bekanntmachung des Hinweises auf die Entscheidung über den Einspruch: **11.12.2024**
(45) Hinweis auf die Patenterteilung: 01.03.2017
(21) Anmeldenummer: 09008962.4
(22) Anmeldetag: 09.07.2009
(51) Int. Cl.: G10K 9/22, G10K 11/00, G01F 1/66

(54) **Ultraschallwandler**
Ultrasound converter
Convertisseur d'ultrasons

(30) Priorität: 15.07.2008 DE 102008033098
(43) Veröffentlichungstag der Anmeldung: 27.01.2010
(73) Patentinhaber: Krohne AG, 4019 Basel (CH)
(72) Erfinder: van Klooster, Jereon, Martin, 4003 DJ, Tiel (NL)
(74) Vertreter: Gesthuysen Patentanwälte

(56) Entgegenhaltungen:
- EP-A1- 1 340 964
- DE-A1- 3 314 733
- DE-A1- 3 314 733
- DE-A1- 3 941 634
- DE-A1- 3 941 634
- DE-B4- 10 084 627
- DE-B4- 10 084 627
- US-A- 5 275 060
- US-A1- 2007 115 102
- US-A1- 2007 115 102

## Beschreibung

Die Erfindung betrifft einen Ultraschallwandler mit einem Gehäuse, einem in einem ersten Bereich des Gehäuses vorgesehenen Ultraschallfenster zur Übertragung von Ultraschallwellen zwischen dem Innenraum des Ultraschallwandlers und dem Außenraum des Ultraschallwandlers und einem in dem Gehäuse benachbart zum Ultraschallfenster angeordneten Wandlerelement, wobei Ultraschallwellen als Gehäusewellen zwischen dem ersten Bereich des Gehäuses über wenigstens einen vermittelnden zweiten Bereich des Gehäuses und einem dem ersten Bereich des Gehäuses gegenüberliegenden dritten Bereich des Gehäuses übertragbar sind.

Ultraschallwandler der vorgenannten Art sind seit vielen Jahren bekannt und werden beispielsweise bei akustischen Durchflußmeßgeräten in großem Umfang eingesetzt. Das Wandlerelement des Ultraschallwandlers wandelt elektrische Energie in eine mechanische Auslenkung um, bei geeigneter Anregung also auch in eine Schwingung im Ultraschallbereich. In diesem Fall arbeitet der Ultraschallwandler als Ultraschallsender und die Ultraschallwellen werden - teilweise - über das Ultraschallfenster in das den Ultraschallwandler umgebende Medium übertragen.

Umgekehrt ist es auch möglich, daß das Ultraschallfenster durch externe - im Medium vorkommende - Druckschwankungen ausgelenkt und die Auslenkung durch das Wandlerelement in ein entsprechendes Signal umgewandelt wird; in diesem Fall arbeitet der Ultraschallwandler als Ultraschallempfänger. In manchen Anwendungen -wie z.B. bei der Füllstandsmessung - wird ein solcher Ultraschallwandler sowohl als Ultraschallsender als auch als Ultraschallempfänger eingesetzt, im Bereich der Durchflußmessung wird ein Ultraschallwandler häufig entweder als Ultraschallsender oder als Ultraschallempfänger eingesetzt.

In beiden Fällen, also sowohl in dem Fall, in dem der Ultraschallwandler als Sender arbeitet als auch in dem Fall, in dem der Ultraschallwandler als Empfänger arbeitet, handelt es sich bei den über das Ultraschallfenster übertragenen Ultraschallwellen, die das Wandlerelement erreichen bzw. von dem Wandlerelement stammen, um das eigentlich interessierende Nutzsignal. Bei den eingangs beschriebenen Ultraschallwellen, die über das Gehäuse weiter- bzw. abgeleitet werden, handelt es sich um parasitäre Gehäusewellen. Die mit diesen Wellen übertragene Energie steht dem Nutzsignal nicht zur Verfügung, Gehäusewellen sind daher in der Regel unerwünscht.

Es gibt verschiedene Maßnahmen, um Gehäusewellen zu reduzieren. Einige Maßnahmen befassen sich mit der Aufgabe, derartige Gehäusewellen schon in der Entstehung zu vermeiden. Dazu zählen beispielsweise bestimmte Ausgestaltungen des Ultraschallfensters hinsichtlich einer besonders guten Impedanzanpassung zur Maximierung des transmittierten Energieanteils oder hinsichtlich einer Auslegung des Ultraschallfensters als λ/4-Schicht zur Reduzierung von Reflexionen. Andere Maßnahmen befassen sich damit, bereits entstandene Gehäusewellen an einer Weiterleitung zu hindern, beispielsweise durch fehlangepaßte akustische Impedanzübergänge. Gehäusewellen stellen jedoch nicht nur eine für das Nutzsignal verlorene Verlustleistung dar, sie können darüber hinaus weitere nachteilige Auswirkungen haben.

Bei der akustischen Durchflußmessung z. B. wird meist der Effekt genutzt, daß in einem in einem Meßrohr transportierten Medium der Ausbreitungsgeschwindigkeit des Schallsignals die Transportgeschwindigkeit des Mediums überlagert ist. Die gemessene Ausbreitungsgeschwindigkeit des Schallsignals gegenüber dem Meßrohr ist also größer als im ruhenden Medium, wenn das Medium in Richtung des Schallsignals transportiert wird, und die Geschwindigkeit des Schallsignals gegenüber dem Meßrohr ist geringer als im ruhenden Medium, wenn das Medium entgegengesetzt zu der Emissionsrichtung des Schallsignals transportiert wird. Die Laufzeit des Schallsignals zwischen dem Schallsender und dem Schallempfänger - beide sind Ultraschallwandler - hängt aufgrund des Mitführeffekts von der Transportgeschwindigkeit des Mediums gegenüber dem Meßrohr und damit gegenüber dem Schallsender und dem Schallempfänger ab.

Problematisch bei Messungen, die auf emittierten Schall- oder Ultraschallsignalen beruhen, ist, nicht nur im Bereich der Durchflußmessung, daß die von dem Wandlerelement erzeugten Ultraschallschwingungen nicht nur über das Ultraschallfenster des Wandlergehäuses in das umgebende Medium des Ultraschallwandlers übertragen werden, sondern daß die erzeugten Ultraschallschwingungen - teilweise auch - über das Gehäuse als Gehäusewellen auf die gesamte Meßvorrichtung übertragen werden. Dies ist - neben der Verlustleistung - problematisch, weil die durch sogenanntes Übersprechen auf ein Meßgerätegehäuse übertragenen Ultraschallwellen auch zu einer erheblichen empfangsseitigen Störung führen können. Das ist darin begründet, daß empfangsseitig nicht ohne weiteres unterscheidbar ist, ob die empfangenen Ultraschallsignale direkt über das Medium und das Ultraschallfenster empfangen worden sind - Nutzsignal - oder indirekt als Gehäusewellen über die Meßvorrichtung und das gesamte Gehäuse des Ultraschallwandlers, insbesondere also über den dritten Bereich des Gehäuses und den vermittelnden zweiten Bereich des Gehäuses zu dem Wandlerelement gelangt sind.

Aufgabe der vorliegenden Erfindung ist es daher, einen Ultraschallwandler anzugeben, der eine weitere Maßnahme zur Verhinderung der Übertragung von Gehäusewellen über das Gehäuse des Ultraschallwandlers realisiert und die aus dem Stand der Technik bekannten Nachteile - zumindest teilweise - vermeidet.

Der erfindungsgemäße Ultraschallwandler, bei dem die zuvor hergeleitete und aufgezeigte Aufgabe gelöst ist, ist zunächst und im wesentlichen durch die Merkmale des Kennzeichnungsteils des Patentanspruchs 1 gekennzeichnet. Eine erfindungsgemäße Weiterbildung sieht vor, daß in dem zweiten Bereich des Gehäuses wenigstens zwei schwach gekoppelte mechanische Resonatoren ausgebildet sind, die in Ausbreitungsrichtung der Gehäusewellen im wesentlichen hintereinander angeordnet sind.

Die erfindungsgemäße Ausgestaltung des Ultraschallwandlers bzw. des zweiten Bereichs des Gehäuses des Ultraschallwandlers bringt verschiedene Vorteile mit sich. Durch die mechanischen Resonatoren ist es zunächst möglich, die von den Ultraschallwellen transportierte Energie lokal zu "fangen", nämlich durch Anregung der mechanischen Resonatoren zur Schwingung. Mechanische Resonatoren sind üblicherweise als Feder-Masse-Systeme beschreibbar, wobei bei realen Feder-Masse-Systemen die Eigenschaft der Feder - nämlich eine auslenkungsabhängige Kraftwirkung - nicht realisierbar ist, ohne einen - wenn auch sehr kleinen - Beitrag zur Masse des Resonators beizusteuern, genauso wie eine Masse aufgrund ihrer konstruktiven Einbringung in den Resonator auch immer die Federeigenschaft des Feder-Masse-Systems beeinflußt; Feder und Masse sind als konstruktiv tatsächlich nicht vollkommen voneinander trennbar. Durch das serielle Anordnen der zumindest zwei mechanischen Resonatoren in Ausbreitungsrichtung der Gehäusewellen wird erreicht, daß die Gehäusewellen alle Resonatoren durchqueren müssen, um von dem ersten Bereich des Gehäuses zu dem dritten Bereich des Gehäuses zu gelangen und umgekehrt. Durch die schwache Kopplung der beiden Resonatoren wird erreicht, daß die Resonatoren für die Gehäusewellen insgesamt ein größeres Hindernis darstellen, als dies bei stark gekoppelten Resonatoren der Fall ist, selbst wenn diese an sich ansonsten gleiche Schwingungseigenschaften haben. Bei einer starken mechanischen Kopplung überträgt sich die Schwingung eines Resonators praktisch unmittelbar auf den benachbarten Resonator, was bei einer schwachen mechanischen Kopplung nicht der Fall ist, wenngleich auch hier selbstverständlich eine mechanische Wechselwirkung zwischen den benachbarten Resonatoren gegeben ist.

Bei einer Ausgestaltung der Erfindung ist vorgesehen, daß die Eigenfrequenzen der Resonatoren im Frequenzbereich der Gehäusewellen liegen, wodurch gewährleistet ist, daß aufgrund des Resonanzeffektes schwingfähiger Systeme möglichst viel der Energie der Gehäusewellen in der Schwingung der Resonatoren gebunden wird. In den Resonatoren, die mit verschiedenen Eigenfrequenzen realisiert werden, lassen sich Gehäusewellen in einem breiten Frequenzbereich unterdrücken, was insbesondere bei der Ab- oder Einstrahlung von breitbandigen Ultraschallsignalen von größer Bedeutung ist. Die in dem zweiten Bereich des Gehäuses vorgesehenen schwach gekoppelten mechanischen Resonatoren wirken damit praktisch als eine Bandsperre (oder mehrere Bandsperren) in dem Übertragungsweg von dem ersten Bereich des Ultraschallwandlers zu dem dritten Bereich des Ultraschallwandlers.

Bei einer weiteren bevorzugten Ausgestaltung ist vorgesehen, daß der erste Bereich des Gehäuses und/oder der dritte Bereich des Gehäuses so ausgelegt ist, daß die Resonanzfrequenz des ersten Bereichs des Gehäuses und/ oder des dritten Bereichs des Gehäuses - im konstruktiv vertretbaren Rahmen - möglichst weit entfernt ist van den Eigenfrequenzen der schwach gekoppelten Resonatoren im zweiten Bereich des Gehäuses und damit möglichst weit bea bstandet sind von der Arbeitsfrequenz des Ultraschallwandlers. Ultraschallwandler sind häufig in dem zweiten Bereich des Gehäuses in einer axialen Erstreckungsrichtung hülsenartig ausgestaltet, wobei das Ultraschallfenster im ersten Bereich des Gehäuses diese Hülse als Stirnfläche zum Medium hin abschlierßt. Der hülsenartig ausgestaltete zweite Bereich des Gehäuses ist dann meist zylinderförmig. Der dritte Bereich des Gehäuses, der dem ersten Bereich des Gehäuses gegenübersteht, kann beispielsweise in einem flanschartigen Anschlußstück bestehen oder auch 20 nur in dem offenen Endbereich der Hülse. Bei einem derart ausgestalteten Ultraschallwandler werden die Gehäusewellen über das Gehäuse insgesamt auch in der axialen Erstreckungsrichtung übertragen. Gemäß der Erfindung ist 25 vorgesehen, daß bei derartig ausgestalteten Ultraschallwandlern wenigstens ein Resonator als Hohlring oder als Stufe ausgestaltet ist, mit einer oberen Flachwand, mit einer unteren Flachwand und mit einer die obere Flachwand und die untere Flachwand verbindenden 30 Stirnwand. Die Ausgestaltung eines Resonators als Hohlring oder als Stufe ist vorteilhaft, weil beide Strukturen fertigungstechnisch sehr einfach und mit großer Präzision herstellbar sind, beispielsweise durch spanabhebendes Drehen einstückig aus Vollmaterial. Größere 35 Hohlringe, deren durch die obere Flachwand, die untere Flachwand und die verbindende Stirnwand begrenzten Hohlraume sehr niedrig sind und sich weit in die Erstreckungsrichtung der Flächwände ausdehnen, sind durch einen mehrteiligen Aufbau gegebenenfalls einfacher her- 40 zustellen. Bei einer besonders bevorzugten Ausgestaltung der Erfindung sind die Hohlringe im wesentlichen in axialer Erstreckungsrichtung des zweiten Bereiches des Gehäuses ausgerichtet, wobei der zweite Bereich des Gehäuses dann im Bereich der Hohlringe in axialer Erstreckungsrichtung insbesondere mäanderförmig verlaufende Wandquerschnitte aufweist. Diese Beschreibung macht deutlich, dar.. eine Gehäusewelle, um von dem ersten Bereich des Gehäuses zu dein dritten Bereich des Gehäuses zu gelangen, zwangsläufig die hintereinander geschalteten Resonatoren durchlaufen muß, die Resonatoren also zwingend nacheinander anregt und - jedenfalls was das Gehäuse des Ultraschallwandlers betrifft - nicht an den Resonatoren vorbeilaufen kann.

Bei den zuvor beschriebenen Ultraschallwandlem hat es sich als besonders vorteilhaft herausgestellt, wenn in der axialen Erstreckungsrichtung die Steifigkeit der Stirnwand des Hohlrings oder der Stufe größer ist als die Steifigkeit der ersten Flachwand und/oder die Steifigkeit der zweiten Flachwand. Durch diese Maßnahme wird erreicht, daß eine Schwingung der Resonatoren in der axialen Erstreckungsrichtung sehr leicht möglich ist und einfach angeregt werden kann. Wenn die Resonatoren - wie zuvor ausgeführt - als Feder-Masse-System aufgefaßt werden, dann ist die Stirnwand derjenige Bestandteil des Resonators, der den wesentlichen Teil der Masse beisteuert, und die erste Flachwand und/oder die zweite Flachwand setzen im wesentlichen die federnden Eigenschaften des Feder-Masse-Systems um. Um eine schwache Kopplung zwischen den benachbarten Resonatoren zu erreichen, hat es sich als vorteilhaft herausgestellt, wenn die Steifigkeit der Stirnwand - in axialer Erstreckungsrichtung gesehen - um wenigstens eine Größenordnung oder sogar um mehr als zwei Größenordnungen größer ist als die Steifigkeit der ersten Flachwand und/oder die Steifigkeit der zweiten Flachwand.

Nach der erfindungsgemäßen Dehre der Erfindung ist die weiter oben hergeleitete und aufgezeigte Aufgabe bei dem eingangs beschriebenen Ultraschallwandler dadurch gelöst, daß der zweite Bereich des Gehäuses in einer axialen Erstreckungsrichtung hülsenartig ausgestaltet ist und in dem zweiten Bereich des Gehäuses wenigstens ein mechanischer Resonator ausgebildet ist, derart, dass es keine direkte Verbindung zwischen dem ersten Bereich und dem dritten Bereich des Gehäuses gibt, an die der Resonator angehängt ist, sodass die Gehäusewellen den Resonator durchlaufen müssen, wobei der Resonator als Hohlring oder als Stufe ausgestaltet ist, mit einer oberen Flachwand, mit einer unteren Flachwand und mit einer die obere Flachwand und die untere Flachwand verbindenden Stirnwand und daß die Eigenfrequenzen des wenigstens einen Resonators im Frequenzbereich der Gehäusewellen liegt. Der Anmelderin sind aus der Praxis zwar Ultraschallwandler bekannt, die einen mechanischen Resonator im zweiten, vermittelnden Bereich des Gehäuses aufweisen, edoch sind diese weitaus komplizierter aufgebaut und entsprechend schwieriger zu fertigen. Die Ausgestaltung des Resonators als Hohlring oder als Stufe ist fertigungstechnisch hingegen sehr einfach und damit kostengünstig zu realisieren, wobei die Feder-Masse-Parameter - Resonanzfrequenz, Dämpfung und damit Güte - dieses schwingfähigen Systems sehr einfach einstellbar sind. Die Einstellung der Parameter wird bevorzugt durch geeignete Wahl der Dicke der Flachwände - Federkonstante - und Dicke der Stirnwand - Masse - vorgenommen. Alle bevorzugten Ausgestaltungen der schwach gekoppelten Resonatoren sind, sofern übertragbar, auch bevorzugte Ausgestaltungen des einzigen Resonators.

Im einzelnen gibt es nun verschiedene Möglichkeiten, den erfindungsgemäßen Ultraschallwandler auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen
Fig. 1 eine schematische Querschnittsdarstellungeines erfindungsgemäßen Ultraschallwandlers mit zwei mechanischen Resonatoren,
Fig. 2a, 2b einen Ausschnittaus einer schematischen Querschnittsdarstellung eines erfindungsgemäßen Ultraschallwandlers in unterschiedlichen Anregungsmodi,
Fig. 3 eine schematische Querschnittsdarstellung eines weiteren Ausführungsbeispiels eines erfindungsgemäßen Ultraschallwandlers,
Fig. 4 eine schematische Querschnittsdarstellung eines weiteren erfindungsgemäßen Ultraschallwandlers mit konisch zulaufenden Resonatoren,
Fig. 5 eine schematische Querschnittsdarstellung eines weiteren erfindungsgemäßen Ultraschallwandlers mit einem stufenförmigen Resonator,
Fig. 6 eine schematische Querschnittsdarstellung eines erfindungsgemäßen Ultraschallwandlers mit O-Ringen als Dämpfungselement und
Fig. 7 eine schematische Querschnittsdarstellung eines erfindungsgemäßen Ultraschallwandlers mit einer Vergußmasse als Dämpfungselement.

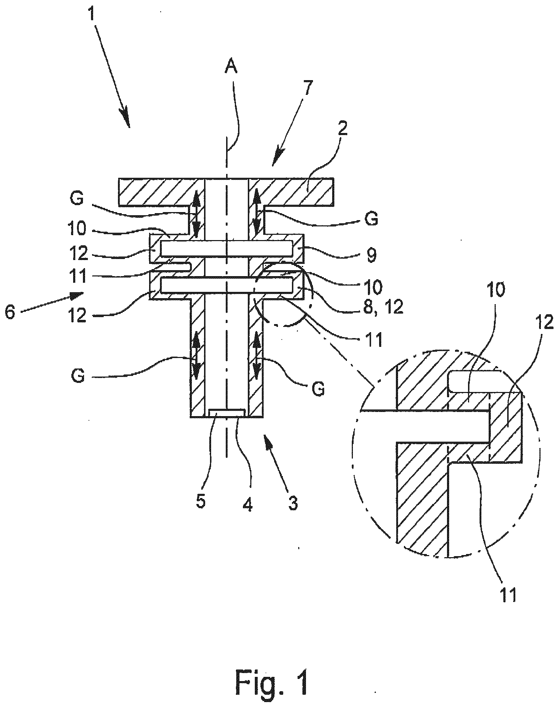

In den Fig. 1 bis 7 sind jeweils dargestellt Ultraschallwandler 1 mit einem Gehäuse 2 und einem in einem ersten Bereich 3 des Gehäuses 2 vorgesehenen Ultraschallfenster 4 zur Übertragung von Ultraschallwellen zwischen dem Innenraum des Ultraschallwandlers 1 und dem Außenraum des Ultraschallwandlers 1; die Ultraschallwellen sind als solche nicht dargestellt.

Alle dargestellten Ultraschallwandler 1 weisen ferner ein in dem Gehäuse 2 benachbart zum Ultraschallfenster 4 angeordnetes Wandlerelement 5 auf, das in den dargestellten Fällen jeweils ein Piezokristall ist. Die Figuren sind insoweit als schematisch zu bezeichnen, als daß sie nur die zum Verständnis der vorliegenden Erfindung notwendigen Elemente zeigen; so ist beispielsweise auf die Darstellung der zur Anregung des Wandlerelements 5 und zur Auslesung von elektrischen Signalen aus dem Wandlerelement 5 notwendigen elektrischen Verkabelung ganz verzichtet worden. Auch wird nicht im Detail eingegangen auf den genauen Aufbau des ersten Bereichs 3 des Gehäuses 2 und auf die Ausgestaltung des Ultraschallfensters 4, beides kann sehr kompliziert aufgebaut sein, was vorliegend jedoch nicht von grundsätzlicher Bedeutung ist. Es ist vorliegend auch nicht wichtig, ob das Gehäuse 2 des Ultraschallwandlers 1 im ersten Bereich 3 einstückig oder mehrstückig ausgestaltet ist, es sind verschiedene Varianten denkbar und aus dem Stand der Technik sind unterschiedliche Ausgestaltungen bekannt.

Im Falle eines als Sender arbeitenden Ultraschallwandlers 1 ist es vorrangiges Ziel der dargestellten Ultraschallwandler 1, die durch das Wandlerelement 5 erzeugten Ultraschallwellen von dem Innenraum des Gehäuses 2 über die Ultraschallfenster 4 in den Außenraum des Ultraschallwandlers 1 zu transmittieren. Dabei ist es von großem Interesse, einen möglichst großen Anteil der zur Anregung des Wandlerelements 5 verwendeten Energie in Form von Ultraschallwellen in den Außenraum des Gehäuses 2 zu übertragen, da damit das eigentliche Nutzsignal am größten ist und ein gutes Signal-zu-RauschVerhältnis erzielt wird.

Es läßt sich jedoch nicht vermeiden, daß ein Teil der Ultraschallwellen als Gehäusewellen G zwischen dem ersten Bereich 3 des Gehäuses 2 über einen vermittelnden zweiten Bereich 6 des Gehäuses 2 und einem dem ersten Bereich 3 des Gehäuses 2 gegenüberliegenden dritten Bereich 7 des Gehäuses 2 übertragen werden und übertragbar sind. Diese Gehäusewellen G reduzieren nicht nur die für das eigentlich interessierende Nutzsignal zur Verfügung stehende Leistung, sondern sie können auch auf weitere Komponenten des hier nicht näher dargestellten Meßaufbau übersprechen, weiter übertragen werden und die direkt übertragenen Nutz-Ultraschallwellen andernorts überlagern, was eine Auswertung der Nutz-Ultraschallwellen erschwert.

Der dritte Bereich 7 des Gehäuses 2 ist in allen dargestellten Ausführungsbeispielen als Flansch ausgestaltet. In der Fig. 1 sind die möglichen Übertragungsrichtungen der Gehäusewellen G angedeutet, wobei die Doppelpfeile verdeutlichen, daß die Gehäusewellen G nicht nur ausgehend von dem ersten Bereich 3 des Gehäuses 2 ausstrahlen, sondern auch in den dritten Bereich 7 des Gehäuses 2 eingekoppelt werden können und sich über den vermittelnden zweiten Bereich 6 des Gehäuses 2 zu dem ersten Bereich 3 des Gehäuses 2 fortpflanzen können.

Die dargestellten Ultraschallwandler 1 zeichnen sich dadurch aus, daß in dem zweiten Bereich 6 des Gehäuses 2 zwei schwach gekoppelte mechanische Resonatoren 8, 9 ausgebildet sind, die in Ausbreitungsrichtung der Gehäusewellen G hintereinander angeordnet sind. In den dargestellten Ausführungsbeispielen sind die mechanischen Resonatoren 8, 9 in dem Gehäuse 2 ausgebildet, weil dadurch erzwungen wird, daß die Gehäusewellen G über und durch die Resonatoren 8, 9 verlaufen müssen, um von dem ersten Bereich 3 des Gehäuses 2 in den dritten Bereich 7 des Gehäuses 2 und umgekehrt zu gelangen. Sobald die Gehäusewellen G die mechanischen Resonatoren 8, 9 erreichen, wird ihre Energie - zumindest teilweise - in den Resonatoren 8, 9 akkumuliert, da die mechanischen Resonatoren 8, 9 zu Schwingungen angeregt werden. Damit ist es möglich, die mit den Gehäusewellen G übertragene Energie - zumindest teilweise - zunächst zu lokalisieren. Damit ist das Ziel erreicht, daß die Gehäusewellen G ungehindert von einem Ende des Gehäuses 2 zu dem anderen Ende des Gehäuses 2 des Ultraschallwandlers 1 gelangen können. Die Energie wird zunächst in den Resonatoren 8, 9 "gefangen" und dann - zeitverzögert, über einen längeren Zeitraum - wieder abgegeben; das Signalzu-Rausch-Verhältnis verbessert sich dadurch beträchtlich. Da jeder reale Resonator auch gedämpft ist, wird ein Teil der Energie der Gehäusewellen G in den Resonatoren 8, 9 in Wärme umgesetzt, jedenfalls nicht mehr als Energie in Form von Ultraschallwellen abgegeben.

Das Verhalten der Resonatoren 8, 9 ist insbesondere bei solchen Anwendungsfällen vorteilhaft, bei denen der Ultraschallwandler 1 bzw. das Wandlerelement 5 periodisch impulsweise angeregt wird, insbesondere in solchen Abständen, in denen die Resonatorschwingungen wieder abgeklungen sind.

Die in den Fig. 1 bis 7 dargestellten Ultraschallwandler 1 weisen mechanische Resonatoren 8, 9 auf, deren Eigenfrequenzen im Frequenzbereich der Gehäusewellen G liegen. Dadurch ist es möglich, selektiv Frequenzanteile der Gehäusewellen G abzufangen bzw. deren Übertragung vom ersten Bereich 3 des Gehäuses 2 zum dritten Bereich 7 des Gehäuses 2 und umgekehrt abzuschwächen.

Wie in den Fig. 1 bis 7 zu erkennen, ist der zweite, vermittelnde Bereich 6 des Gehäuses 2 in einer axialen Erstreckungsrichtung A hülsenartig ausgestaltet, wobei sich in der Erstreckungsrichtung A auch die Gehäusewellen G im Gehäuse 2 des Ultraschallwandlers 1 im wesentlichen ausbreiten. In den Fig. 1 bis 4 sowie 6 und 7 sind die beiden jeweils dargestellten Resonatoren 8, 9 als Hohlring ausgestaltet, wobei jeder Resonator 8, 9 eine obere Flachwand 10, eine untere Flachwand 11 und eine die obere Flachwand 10 und die untere Flachwand 11 verbindende Stirnwand 12 aufweist. Die Stirnwand 12 verbindet die obere Flachwand 10 und die untere Flachwand 11 jeweils umlaufend, so daß die Gehäuse 2 der dargestellten Ultraschallwandler 1 insgesamt dicht sind, wenn die Gehäuse 2 in dem dritten Bereich 7 des Gehäuses mit einem geeigneten, hier nicht dargestellten Anschluß verschlossen werden.

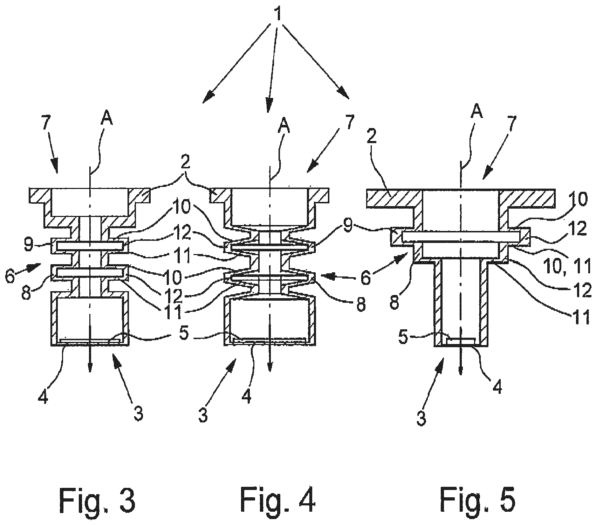

In der Fig. 5 ist ein Ultraschallwandler 1 dargestellt, der einen als Stufe ausgestalteten Resonator 8 und einen als Hohlring ausgestalteten Resonator 9 aufweist. Bei dem als Stufe ausgebildeten Resonator 8 bewirken die obere Flachwand 10 und die untere Flachwand 11 - in axialer Erstreckungsrichtung gesehen -eine Durchmessererweiterung bzw. eine Durchmesserverringerung des hülsenartig ausgestalteten Gehäuses. Demgegenüber stehen sich bei dem als Hohlring ausgestalteten Resonator 9 in axialer Erstreckungsrichtung A die obere Flachwand 10 und die untere Flachwand 11 gegenüber.

In den Fig. 1 bis 7 haben die als Hohlringe ausgestalteten Resonatoren 8, 9 gemeinsam, daß sie im wesentlichen in axialer Erstreckungsrichtung A des zweiten Bereiches 6 des Gehäuses 2 ausgerichtet sind, wenn davon ausgegangen wird, daß die die Orientierung der Hohlringe kennzeichnende Flächennormale senkrecht auf der Ebene steht, in der jeder Hohlrings jeweils flachseitig liegt. Diese Flächennormale ist in den dargestellten Ausführungsbeispielen deckungsgleich mit - koaxial zu - der in den Figuren als axiale Erstreckungsrichtung A gekennzeichneten Mittellinie. Der zweite Bereich des Gehäuses 2 weist im Bereich der Hohlringe in axialer Erstreckungsrichtung A demzufolge mäanderförmig verlaufende Wandquerschnitte auf. Wichtig ist, daß es keine direkte Verbindung zwischen dem ersten Bereich 3 des Gehäuses 2 und dem dritten Bereich 7 des Gehäuses 2 gibt, an die die Resonatoren 8, 9 quasi nur "angehängt" sind, da in diesen Fällen die Resonatoren nicht effektiv genutzt werden könnten, da die Gehäusewellen G an derart ausgestalteten Resonatoren quasi "entlangstreifen" könnten. In den dargestellten Ausführungsbeispielen müssen die Gehäusewellen G die mechanischen Resonatoren 8, 9 praktisch durchlaufen.

Bei den in den Fig. 1 bis 7 dargestellten Ausführungsbeispielen handelt es sich um schematische Zeichnungen, die nicht zwingend maßstabsgerecht sind. Insbesondere ist in den Figuren nicht maßstabsgetreu dargestellt, in welchem Verhältnis die Dicke der oberen Flachwand 10 und der unteren Flachwand 11 zu der Dicke der verbindenden Stirnwand 12 jeweils steht. Tatsächlich sind die Ultraschallwandler 1 in den Ausführungsbeispielen so ausgeführt, daß in axialer Erstreckungsrichtung A die Steifigkeit der Stirnwand 12 größer ist als die Steifigkeit der oberen Flachwand 10 und die Steifigkeit der unteren Flachwand 11. In den dargestellten Fällen unterscheiden sich die Steifigkeiten dieser Elemente der Resonatoren 8, 9 in etwa um den Faktor 300, ist nämlich die Steifigkeit der Stirnwand 12 um etwa den Faktor 300 größer als die Steifigkeit der oberen Flachwand 10 und die Steifigkeit der unteren Flachwand 11 eines jeden Resonators 8, 9. Dadurch wird bewirkt, daß die Resonatoren 8, 9 besonders schwingfähig in axialer Erstreckungsrichtung A des Gehäuses 2 und damit in der Laufrichtung der Gehäusewellen G sind.

Eine geeignete Dimensionierung der oberen Flachwand 10 und der unteren Flachwand 11 gegenüber der verbindenden Stirnwand 12 ergibt sich sehr einfach, indem zur Berechnung der Steifigkeiten dieser Elemente hinsichtlich der axialen Erstreckungsrichtung A die Flächenträgheitsmomente zweiter Ordnung der Grundkörper herangezogen werden. Dies ist im Falle der oberen Flachwand 10 und der unteren Flachwand 11 eine am Umfang eingespannte Kreisringscheibe und im Falle der verbindenden Stirnwand 12 vereinfachend ein Balken.

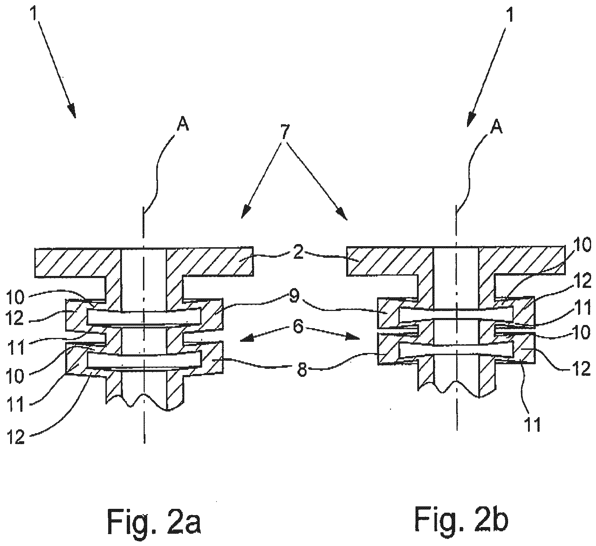

In den Fig. 2a und 2b ist jeweils ein Ultraschallwandler 1 mit zwei Resonatoren 8, 9 dargestellt, wobei sich die Resonatoren 8, 9 im schwingenden Zustand befinden. In Fig. 2a sind die Resonatoren 8, 9 im ersten Schwingungsmodus angeregt - die obere Flachwand 10 und die untere Flachwand 11 schwingen gleichsinnig -, wohingegen die Resonatoren 8, 9 in Fig. 2b im zweiten Schwingungsmodus angeregt sind, sich also jeweils die obere Flachwand 10 und die untere Flachwand 11 gegenläufig zueinander bewegen.

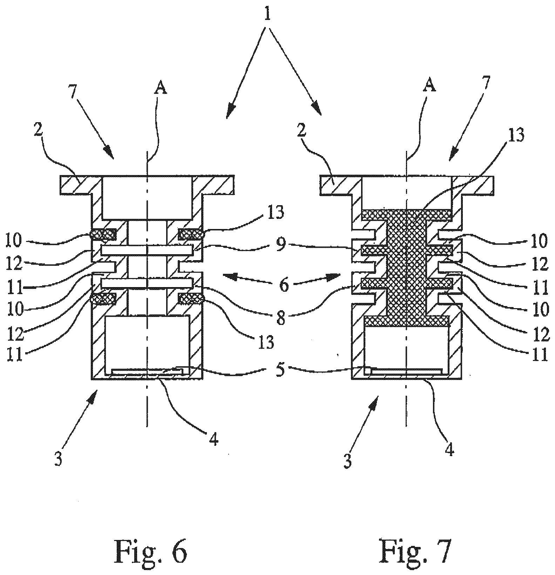

Die Ultraschallwandler 1 gemäß den Fig. 6 und 7 weisen gedämpfte Resonatoren 8, 9 auf. Im Ausführungsbeispiel gemäß Fig. 6 sind im Außenbereich des Gehäuses 2 des Ultraschallwandlers 1 als Dämpferelemente 13 O-Ringe vorgesehen, wobei diese nicht zwischen den Resonatoren 8, 9 angeordnet sind, sondern jeweils zwischen einem Resonator 8, 9 und einem benachbarten Gehäuseteil der Resonatoren 8, 9. Dadurch wird eine Verstärkung der Kopplung zwischen den Resonatoren 8, 9 vermieden bei gleichzeitiger effektiver Dämpfung der jeweiligen Resonatorschwingungen.

In Fig. 7 wird das Dämpferelement 13 durch eine Vergußmasse gebildet, die die Resonatoren 8, 9 bzw. den Hohlraum der als Hohlring ausgebildeten Resonatoren 8, 9 ausfüllt. Auch durch dieses Dämpferelement 13 wird die Kopplung zwischen den Resonatoren 8, 9 nicht verstärkt. Viskoelastisches Material eignet sich als Dämpferelement 13, wenn sichergestellt werden kann, daß es nicht aus den Resonatoren 8, 9 bzw. den Zwischenräumen zwischen den Resonatoren verdrängt werden kann. Für die O-Ringe wird im Wesentlichen elastisches Material verwendet, nämlich ein Elastomer.

## Patentansprüche

1. Ultraschallwandler mit einem Gehäuse (2), einem in einem ersten Bereich (3) des Gehäuses (2) vorgesehenen Ultraschallfenster (4) zur Übertragung von Ultraschallwellen zwischen dem Innenraum des Ultraschallwandlers und dem Außenraum des Ultraschallwandlers und einem in dem Gehäuse (2) benachbart zum Ultraschallfenster (4) angeordneten Wandlerelement (5), wobei Ultraschallwellen als Gehäusewellen (G) zwischen dem ersten Bereich (3) des Gehäuses (2) über wenigstens einen vermittelnden zweiten Bereich (6) des Gehäuses (2) und einem dem ersten Bereich (3) des Gehäuses (2) gegenüberliegenden dritten Bereich (7) des Gehäuses (2) übertragbar sind,
**dadurch gekennzeichnet,**
**daß** der zweite Bereich (6) des Gehäuses (2) in einer axialen Erstreckungsrichtung (A) hülsenartig ausgestaltet ist und in dem zweiten Bereich (6) des Gehäuses (2) wenigstens ein mechanischer Resonator (8, 9) ausgebildet ist,
derart dass es keine direkte Verbindung zwischen dem ersten Bereich (3) und dem dritten Bereich (7) des Gehäuses (2) gibt, an die der Resonator (8, 9) angehängt ist, sodass die Gehäusewellen (G) den Resonator (8, 9) durchlaufen müssen,
wobei der Resonator (8, 9) als Hohlring oder als Stufe ausgestaltet ist, mit einer oberen Flachwand (10), mit einer unteren Flachwand (11) und mit einer die obere Flachwand (10) und die untere Flachwand (11) verbindenden Stirnwand (12) und daß die Eigenfrequenzen des wenigstens einen Resonators (8, 9) im Frequenzbereich der Gehäusewellen (G) liegt.

2. Ultraschallwandler nach Anspruch 1, **dadurch gekennzeichnet, daß** in dem zweiten Bereich (6) des Gehäuses (2) wenigstens zwei schwach gekoppelte mechanische Resonatoren (8, 9) ausgebildet sind, die in Ausbreitungsrichtung der Gehäusewellen (G) im wesentlichen hintereinander angeordnet sind.

3. Ultraschallwandler nach Anspruch 1 oder 2, **dadurch gekennzeichnet, daß** die Hohlringe im wesentlichen in axialer Erstreckungsrichtung (A) des zweiten Bereiches (6) des Gehäuses (2) ausgerichtet sind, insbesondere wobei der zweite Bereich (6) des Gehäuses (2) im Bereich der Hohlringe in axialer Erstreckungsrichtung (A) mäanderförmig verlaufende Wandquerschnitte aufweist.

4. Ultraschallwandler nach einem der Ansprüche 1 bis 3, **dadurch gekennzeichnet, daß** in axialer Erstreckungsrichtung (A) die Steifigkeit der Stirnwand (12) größer ist als die Steifigkeit der oberen Flachwand (10) und/oder die Steifigkeit der unteren Flachwand (11), insbesondere um wenigstens eine Größenordnung größer ist, bevorzugt um wenigstens zwei Größenordnungen größer ist.

5. Ultraschallwandler nach einem der Ansprüche 1 bis 4, **dadurch gekennzeichnet, daß** wenigstens ein Resonator (8, 9) gedämpft ist, insbesondere durch wenigstens ein in einem Resonator (8, 9) und/oder zwischen zwei Resonatoren (8, 9) oder benachbart zu einem Resonator (8, 9) angeordnetes Dämpferelement (13).

6. Ultraschallwandler nach Anspruch 5, **dadurch gekennzeichnet, daß** das Dämpferelement (13) wenigstens ein O-Ringe oder eine Vergußmasse ist, insbesondere aus einem elastischen oder viskoelastischen Material.

## Claims

1. Ultrasonic transducer with a housing (2), an ultrasonic window (4) provided in a first region (3) of the housing (2) for transmitting ultrasonic waves between the interior of the ultrasonic transducer and the exterior of the ultrasonic transducer, and a transducer element (5) located in the housing (2) adjacent to the ultrasonic window (4), wherein ultrasonic waves can be transmitted as housing waves (G) between the first region (3) of the housing (2) via at least one intermediate second region (6) of the housing (2) and a third region (7) of the housing (2) opposite the first region (3) of the housing (2),
**characterized in**
**that** the second region (6) of the housing (2) is made sleeve-shaped in the direction of axial extension (A) and at least one mechanical resonator (8, 9) is provided in the second region (6) of the housing (2),
such that there is no direct connection between the first region (3) and the third region (7) of the housing (2) to which the resonator (8, 9) is attached, so that the housing waves (G) have to pass through the resonator (8, 9),
wherein the resonator (8, 9) is designed as a hollow ring or a step with an upper flat wall (10), with a lower flat wall (11) and with an end wall (12) that connects the upper flat wall (10) to the lower flat wall (11) and that the eigen-frequencies of the at least one resonator (8, 9) lies in the frequency range of the housing waves (G).

2. Ultrasonic transducer according to claim 1, **characterized in that** at least two weakly coupled mechanic resonators (8, 9) are arranged in the second region (6) of the housing (2), which are arranged essentially in succession in the direction of propagation of the housing waves (G).

3. Ultrasonic transducer according to claim 1 or 2, **characterized in that** the hollow rings are aligned essentially in the direction of axial extension (A) of the second region (6) of the housing (2), in particular wherein the second region (6) of the housing (2) has meandering wall cross sections in the region of the hollow rings in the direction of axial extension (A).

4. Ultrasonic transducer according to any one of claims 1 to 3, **characterized in that**, in the direction of axial extension (A), the stiffness of the end wall (12) is greater than the stiffness of the upper flat wall (10) and/or the stiffness of the lower flat wall (11), in particular, is greater by at least one order of magnitude, preferably by at least two orders of magnitude.

5. Ultrasonic transducer according to any one of claims 1 to 4, **characterized in that** at least one of the resonators (8, 9) is damped, in particular by at least one attenuator element (13) located in a resonator (8, 9) and/or between two resonators (8, 9) or adjacent to one of the resonators (8, 9).

6. Ultrasonic transducer according to claim 5, **characterized in that** the attenuator element (13) is at least an O-ring or a potting mass, in particular of an elastic or viscoelastic material.

## Revendications

1. Convertisseur à ultrasons comportant un boîtier (2), une fenêtre à ultrasons (4) prévue dans une première zone (3) du boîtier (2) et destinée à transmettre des ondes ultrasonores entre l'espace intérieur du convertisseur à ultrasons et l'espace extérieur du convertisseur à ultrasons et un élément convertisseur (5) disposé dans le boîtier (2) à proximité de la fenêtre à ultrasons (4), des ondes ultrasonores pouvant être transmises en tant qu'ondes de boîtier (G) entre la première zone (3) du boîtier (2), par l'intermédiaire d'au moins une deuxième zone (6) intermédiaire du boîtier (2), et une troisième zone (7) du boîtier (2) opposée à la première zone (3) du boîtier (2),
**caractérisé en ce que**
la deuxième zone (6) du boîtier (2) est conçue à la façon d'un manchon s'étendant dans une direction d'extension axiale (A) et **en ce qu'**au moins un résonateur mécanique (8, 9) est réalisé dans la deuxième zone (6) du boîtier (2), de manière à ce que, entre la première zone (3) et la troisième zone (7) du boîtier (2), il n'y ait aucune liaison directe à laquelle le résonateur (8, 9) est attaché de sorte que les ondes de boîtier (G) doivent passer par le résonateur (8, 9),
le résonateur (8, 9) étant réalisé sous la forme d'un anneau creux ou sous la forme d'un gradin pourvu d'une paroi supérieure plane (10), d'une paroi inférieure plane (11) et d'une paroi frontale (12) reliant entre elles la paroi supérieure plane (10) et la paroi inférieure plane (11), et à ce que les fréquences propres de l'au moins un résonateur (8, 9) soient situées dans le domaine fréquentiel des ondes de boîtier (G).

2. Convertisseur à ultrasons selon la revendication 1, **caractérisé en ce qu'**au moins deux résonateurs mécaniques (8, 9) faiblement couplés sont réalisés dans la deuxième zone (6) du boîtier (2), lesquels résonateurs sont disposés sensiblement l'un derrière l'autre dans la direction de propagation des ondes de boîtier (G).

3. Convertisseur à ultrasons selon la revendication 1 ou 2, **caractérisé en ce que** l'anneau creux est sensiblement orienté dans la direction d'extension axiale (A) de la deuxième zone (6) du boîtier (2), et plus particulièrement, la deuxième zone (6) du boîtier (2) présentant, dans la région de l'anneau creux, des sections transversales de paroi s'étendant de manière sinueuse dans la direction d'extension axiale (A).

4. Convertisseur à ultrasons selon l'une quelconque des revendications 1 à 3, **caractérisé en ce que** la rigidité de la paroi frontale (12) dans la direction d'extension axiale (A) est supérieure à la rigidité de la paroi supérieure plane (10) et/ou à la rigidité de la paroi inférieure plane (11), et est notamment supérieure d'au moins un ordre de grandeur, et de préférence, d'au moins deux ordres de grandeur.

5. Convertisseur à ultrasons selon l'une quelconque des revendications 1 à 4, **caractérisé en ce qu'**au moins un résonateur (8, 9) est amorti, notamment par au moins un élément amortisseur (13) disposé dans un résonateur (8, 9) et/ou entre deux résonateurs (8, 9) ou au voisinage d'un résonateur (8, 9).

6. Convertisseur à ultrasons selon la revendication 5, **caractérisé en ce que** l'élément amortisseur (13) est un joint torique ou une masse coulée, notamment en matière élastique ou viscoélastique.
